Europäisches Patentamt

European Patent Office

Office européen des brevets

(19)

(11) **EP 1 326 465 A1**

(12) **EUROPEAN PATENT APPLICATION**

(43) Date of publication:
**09.07.2003 Bulletin 2003/28**

(51) Int Cl.$^{7}$: **H04Q 7/38**

(21) Application number: **02290026.0**

(22) Date of filing: **07.01.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Mitsubishi Electric Information Technology Centre Europe B.V. 1119 NS Schiphol Rijk (NL)**

(72) Inventor: **Seguin, Laure, c/o Mitsubishi Electricité 35700 Rennes (FR)**

(74) Representative: **Maillet, Alain Cabinet le Guen & Maillet, 5, Place Newquay, B.P. 70250 35802 Dinard Cedex (FR)**

(54) **Method of call admission control in a CDMA mobile telecommunication system**

(57)    The invention concerns a method of call admission control in a CDMA mobile telecommunication system. When a new connection is requested by a user of said system to a base station thereof, a value indicating the gain ($h_{N+1}$) of the transmission channel between said user and said base station is compared with a predetermined threshold value ($h(\Lambda^{max})$) characteristic of the cell served by said base station, and it is decided whether to reject the connection of said user on the basis of the result of said first comparison step.

**Fig. 2A**

EP 1 326 465 A1

**Description**

The present invention concerns in general terms a method of call admission control in a CDMA (Code Division Multiple Access) mobile telecommunication system.

In second generation mobile telecommunication systems like GSM the decision as to whether a new call can be accepted in a cell is a relatively simple task since it merely depends upon the number of available channels in the cell at the time of the request of connection.

In third generation mobile telecommunication systems using CDMA (Code Division Multiple Access), however, the call admission procedure is a much more complex issue. Indeed, in a CDMA telecommunication system, users share the same bandwidth and consequently signals transmitted therefrom or thereto interfere each other. Spreading and despreading the user symbols with orthogonal coding sequences allows this interference to be reduced to a significant extent (called processing gain) but a certain amount interference (called Multiple Access Interference or MAI) still remains. As the load of a cell increases, the MAI level within this cell increases as well and consequently the mobile terminals have to transmit at a higher power level in order to overcome interference. Since the transmitted power of a mobile terminal is bounded in practice by a given maximum value, a too high level of interference cannot be compensated for (the cell is then said "saturated"). The acceptance of a new connection depends therefore on the signal to noise plus interference ratio ($SINR$) already existing within the cell, said interference being due to the active users present in the cell (intra-cellular Multiple Access Interference, denoted hereinafter $MAI_{intra}$) but also in the neighbouring cells (extra-cellular Multiple Access Interference, denoted hereinafter $MAI_{extra}$). As a cell becomes more heavily loaded, it is more difficult for a user distant to the base station or in general for a user experiencing a high path attenuation loss to overcome interference. Consequently, a connection requested from a distant user will likely be refused (call blocking) and the connections already established with users at the periphery of the cell will likely be dropped (call dropping). This phenomenon is known in the literature as "cell breathing": the coverage of a cell decreases when its load increases and, conversely, increases when its load decreases.

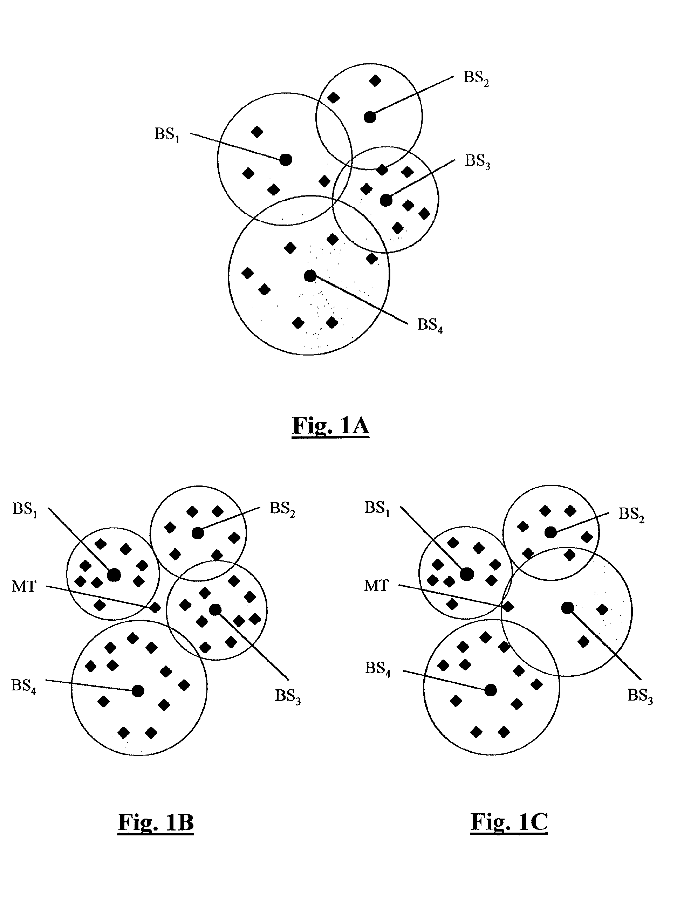

An example of cell breathing is shown in Figs. 1A to 1C. A group of four adjacent cells $C_1$ to $C_4$ respectively served by base stations $BS_1$ to $BS_4$ has been represented, the coverage of each cell being schematically indicated by a disk filled in grey. The mobile terminals are represented by diamond-shaped dots. As it can be seen from a comparison of Fig. 1A and Fig. 1B, the coverage of a cell shrinks when its load increases. If the adjacent cells all experience a high load at the same time (i.e. become so called "hot spots") holes may develop in the coverage. For example, the mobile terminal designated by MT in Fig. 1B and located at the boundary of cells $C_1$ and $C_3$ cannot be served. However, if two adjacent cells respectively experience a high and a light load, a mobile terminal located at the boundary of these cells which cannot be covered by the heavily loaded cell may be covered by the other. This situation is illustrated in Fig. 1C. In this instance the lightly loaded cell $C_3$ extends its coverage at the expense of the heavily loaded cell $C_1$. Cell breathing provides therefore a certain "natural" balance between the loads of adjacent cells.

When planning a CDMA network, an important issue is the deployment of the base stations. Their locations have to be carefully chosen so that the respective cells overlap. As the area covered by a cell varies with its load, it is often necessary to simulate the network in order to prevent that coverage holes develop in hot spot situations.

When operating the CDMA network, a call admission control (CAC) has to be implemented for each cell in order to decide whether a new call can be accepted. More specifically, if an incoming user requests a connection with a given quality of service (QoS) generally characterised by a given average rate and target BER (Bit Error Rate) for a real-time connection, the admission control checks whether the additional connection can be accommodated without endangering the QoS of the communication already established. In fact, if a call were to be admitted irrespective of the carried load and current interference level, it could be detrimental to the QoS provided to the other users. The degradation of QoS can lead in turn to a high dropping rate and hence to radio resource wastage. By filtering the admission of incoming calls, the CAC mechanism mitigates the increase of interference and the extent of cell breathing. However, the CAC methods known from the prior art do not effectively prevent coverage holes to develop in hot spot situations. Furthermore, they are not capable of discriminating between calls related to different types of services, the real time services being more demanding in terms of resources than non real time services.

A first known CAC method is based on a criterion of maximum number of connections a cell can tolerate for a given QoS level. For determining this maximum number, average values of the radio propagation model (i.e. path attenuation coefficients) are assumed. The admission control is rather coarse since it does not take into account the current situation of the cell, in particular neither its actual interference level not its actual size.

A second known CAC method is based on the measurement of the interference level in the cell. The additional interference that would imply the acceptance of the incoming call is then predicted. If the new value of interference is compatible with the QoS of the established connections, the call is accepted. It should be noted that this procedure offers no guarantee that the QoS will be maintained for the duration of the communication if the interference level happens to rise.

A first object of the present invention is to propose a method of call admission control which effectively ensures that no coverage holes develop due to cell breathing.

A second and subsidiary object of the present invention is to propose a method of call admission control which guarantees that the requested QoS is reasonably maintained for the duration of the call.

A third and subsidiary object of the present invention is to propose a method of call admission control which provides a controlled load balancing between adjacent cells.

A fourth and subsidiary object of the present invention is to propose method of call admission control which allows for different categories of services.

The method according to a first embodiment of the invention is defined in claim 1. The method according to a second embodiment of the invention is defined in claim 8.

The characteristics of the invention mentioned above, as well as others, will emerge more clearly from a reading of the following description in relation to the accompanying figures, amongst which:

Figs. 1A represents schematically the coverage of a plurality of adjacent cells for a first distribution of mobile terminals;

Fig. 1B represents schematically the coverage of a plurality of adjacent cells for a second distribution of mobile terminals;

Fig. 1C represents schematically the coverage of a plurality of adjacent cells for a third distribution of mobile terminals;

Fig. 2A represents schematically the coverage of a plurality of adjacent cells when a method of call admission according to the invention is used;

Fig. 2B represents schematically the coverage of a plurality of adjacent cells when a method of call admission according to a variant of the invention is used;

Fig. 3A depicts a synoptic of the method of call admission according of the first embodiment of the invention;

Fig. 3B depicts a synoptic of the method of call admission according to a variant of the first embodiment of the invention;

Fig. 4A depicts a synoptic of the method of call admission according to the second embodiment of the invention;

Fig. 4B depicts a synoptic of the method of call admission according to a variant of the second embodiment of the invention.

The method of call admission control according to the invention makes use of a criterion based on a channel characteristic representative of the attenuation or equivalently of the gain of the channel at the time the call is requested by the user. Said characteristic is compared to a threshold value which is function of the maximum load (or capacity) that can be accepted by the cell. The call is accepted if the new load lies below the capacity value and if said gain of the channel is higher than said threshold value.

More specifically, let us consider the uplink of a cell in a CDMA telecommunication system. Let us suppose that $N$ users are already served by the base station of the cell. The signal to interference plus noise ratio estimated at the base station for the $i$th user can be expressed as:

$$SINR_1 = \frac{P_i^{rec}}{MAI_{intra} + MAI_{extra} + N_0} \qquad (1)$$

where $P_i^{rec}$ stands for the power of the signal received from user $i$, $MAI_{intra}$ and $MAI_{extra}$ are respectively the levels of intra-cellular interference and extra-cellular interference, $N_0$ is the power of the thermal noise affecting the reception of the signal. The bit error rate (BER) is function of the ratio $\frac{E_b}{N_0}$ where $E_b$ stands for the energy per received bit. This ratio can be obtained as:

$$\left(\frac{E_b}{N_0}\right)_i = \frac{W}{R_i} SINR_i = \frac{W}{R_i} \frac{h_i P_i}{\sum_{j \neq i} h_j P_j + MAI_{extra} + \eta_0 W} \qquad (2)$$

where $W$ is the total bandwidth of the system, $h_j$ is the power transmission coefficient of the uplink channel for user $j$, $P_j$ is the transmitted power of user $j$, $\eta_0$ is the noise power density and $R_i$ indicates the bit rate for user $i$. The coefficients $h_j$ will be referred to as channel gains, although they are obviously lower than 1.

It is first assumed that the users have access to real time services. Each user $j$ requests a quality of service

$QoS_j$ which is characterised by a target bit error rate $BER_j$ and an average rate $R_j$. The target bit error rate $BER_j$ corresponds in practice to a target value $\gamma_j$ of the ratio

$$\left(\frac{E_b}{N_0}\right)_j$$

. From (2) and for a target value $\gamma_i$, the user $i$ has to transmit with a power $P_i$ verifying:

$$\alpha_i h_i P_i = \sum_{j \neq i} h_j P_j + (\eta_0 W + MAI_{extra})$$  (3)

where $\alpha_i = W/R_i\gamma_i$.

Since user $i$ uses a real time service, $R_i$ can be equated with the average bit rate $\bar{R}_i$. We obtain therefore a linear system of $N$ equations where the transmitted powers $P_j$, $j=1,..,N$ are the unknowns. As described in the article by A. Sampath *et al.* entitled "Power control and resource management for a multimedia CDMA wireless system" and published in Proc. PIRMC '95, this system can easily be solved by subtracting an each equation to the next. For a given user $i$, the power $P_i$ is obtained by:

$$P_i \approx \frac{N_0 + MAI_{extra}}{h_i} \cdot \frac{1/k_i}{1 - \sum_{j=1}^{N} 1/k_j}$$  (4)

where $k_i = \alpha_i + 1 = (W/R_i\gamma_i) + 1$.

The denominator term appears as an indicator of the remaining capacity $c_N$ of a maximum capacity of the cell:

$$c_N = 1 - \sum_{j=1}^{N} 1/k_j = 1 - \sum_{j=1}^{N} \lambda_j$$  (5)

where

$$\lambda_j = 1/k_j = \frac{1}{1 + \dfrac{W}{Rj\gamma j}}$$

is the contribution of user j to the capacity decrease and where $c_N = 1$ when no user is served. It is therefore proposed to define the total load of the cell as:

$$\Lambda_N = \sum_{j=1}^{N} \lambda_j$$  (6)

and a global value $K_N$ for all the users of the cell as:

$$1/K_N = \sum_{j=1}^{N} 1/k_i$$  (7)

It will be noted that $\Lambda_N = 1/K_N$. The remaining capacity $c_N$ decreases progressively as N increases i.e. as new calls are admitted, each call contributing to the decrease in proportion to the QoS it requests. In practice, as it will be shown below, as the transmitted power of the mobile terminals is bounded, the remaining capacity cannot be decreased below a minimum value. In other words, the load of the cell must lie below a maximum value or capacity of the cell.

The transmitted power $P_j$ given by expression (4) is bounded by a maximum power value $P^{\max}_j$. Without loss of generality, we may assume that the maximum value $P^{\max}_j$ is the same for all the mobile terminals. The transmitted power $P_i$ of user $i$ is lower than the maximum value $P^{\max}$ if:

$$h_i \geq \frac{1}{k^{\min}} \frac{N_0 + MAI_{\text{extra}}}{P^{\max}} \frac{1}{1-\Lambda_N} = \frac{1}{k^{\min}} \frac{N_0 + MAI_{\text{extra}}}{P^{\max}} \frac{K_N}{K_{N-1}} \tag{8}$$

where

$$k^{\min} = \underset{j=1,..,N}{Min}\left(k_j\right)$$

corresponds to the highest QoS in the cell.

The values $k_j$ and $\lambda_j$ depending only upon the QoS of user $j$, the summation over the users in (5), (6) and (7) can be replaced a summation over the different categories of QoS. If $P$ is the number of different categories of real time services the system can accommodate and $N_p$ is the number of users falling into the $p^{\text{th}}$ category, with

$$N=\sum_{p=1}^{P} N_p$$

, we have

$$\Lambda_N=\sum_{p=1}^{P} N_p \lambda_p \tag{9}$$

and

$$1/K_N=\sum_{p=1}^{P} N_p/k_p \tag{10}$$

where $k_p$ and $\lambda_p$ relate to the $p^{\text{th}}$ real time service category.

For the purpose of the invention, a gain function $h(\Lambda)$ is defined by:

$$h(\Lambda)=\frac{1}{K^{\min}} \frac{N_0 + MAI_{\text{extra}}}{P^{\max}} \frac{1}{1-\Lambda} \tag{11}$$

Let us assume that a predetermined maximum load or capacity $\Lambda^{\max}$ is attributed to the cell. According to a first embodiment of the invention, if an incoming user requests a connection with a given QoS characterised by a rate $R_{N+1}$ and by a BER corresponding to a

$$\left(\frac{E_b}{N_0}\right)$$

ratio value $\gamma_{N+1}$, the control admission control checks whether:

$$h_{N+1} \geq h(\Lambda^{max}) \tag{12}$$

and

$$\Lambda_N + \lambda_{N+1} = \Lambda_N + \frac{1}{1 + \dfrac{W}{R_{N+1}\gamma_{N+1}}} \leq \Lambda^{max} \tag{13}$$

The first condition (12) means that the channel gain of the new user at the time of the request must be high enough in order to overcome the maximum level of interference. Expression (12) defines therefore the coverage of the cell as a function of $\Lambda^{max}$. An increase of $\Lambda^{max}$ leads to a decrease of the cell coverage but also to an increase of the number of users that can be served.

The second condition (13) simply states that the new load must lie below the maximum value $\Lambda^{max}$.

The capacity $\Lambda^{max}$ can be determined by marketing studies or saturation measurements. In a variant of the invention, the capacity $\Lambda^{max}$ is made adaptive and varies according to the expected maximum traffic/ maximum load. For example, at certain hours of the day e.g. rush hours or slack hours the traffic can be predicted to be high or low in certain areas. Advantageously, the capacity $\Lambda^{max}$ is adapted accordingly. Should the case occur, a capacity function of the time $\Lambda^{max} = f(t)$ and of periodicity e.g. a day or a week can be initially predetermined and then constantly updated by monitoring the cell saturation and/or the blocking rate. The update can be performed by low pass filtering the capacity function. By varying the capacity, a kind of controlled cell breathing is provided where the size of the cell is tailored to the expected load of the cell.

Fig. 2A shows the coverage of four adjacent cells when a call admission control according to the first embodiment is implemented. The coverage of cell $n$ is indicated by $C(\Lambda_n^{max}(t))$ and has been represented schematically for a slack time $t_1$ and a peak time $t_2$. Since the traffic is expected to rise at time $t_2$, the coverage is decreased by increasing the corresponding load maximum value $\Lambda_n^{max}$. The deployment of the base stations must ensure that the cells do overlap, even at peak times, without occurrence of coverage holes.

Advantageously, the capacity functions $\Lambda_n^{max}(t)$ are determined and supervised by the Radio Resource Manager (RRM) of Radio Network Controller (RNC) which controls a group of neighbouring base stations. In such instance, if a cell becomes a hot spot and if the traffic in at least one of the adjacent cells is lower than expected, i.e. is lower than its capacity, the load of the different cells can be balanced in a controlled way by adapting the values of $\Lambda_n^{max}$.

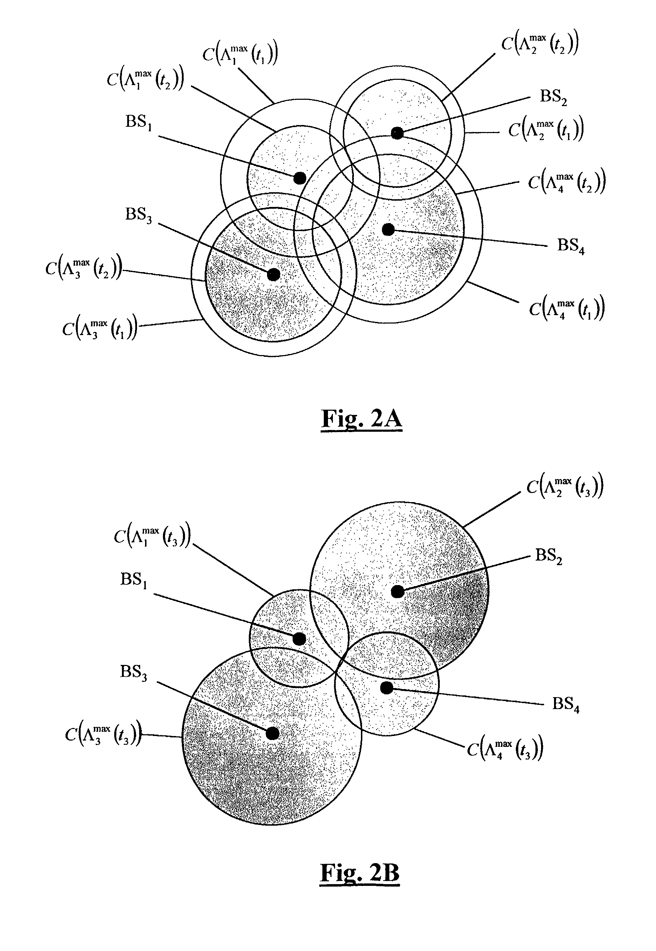

Fig. 2B shows the coverage of the same four adjacent cells at a time $t_3$, when cell 4 is a hot spot and the cells 2 and 3 carry a lower load than expected. The RRM then decides to increase temporarily $\Lambda_2^{max}$, $\Lambda_3^{max}$ and to decrease $\Lambda_4^{max}$ so that no holes appear in the coverage and $BS_4$ can cope with the surge of traffic. In contrast with the known CAC methods, the parameters governing the call admission in each cell are managed and adapted in a coordinated way by the RRM.

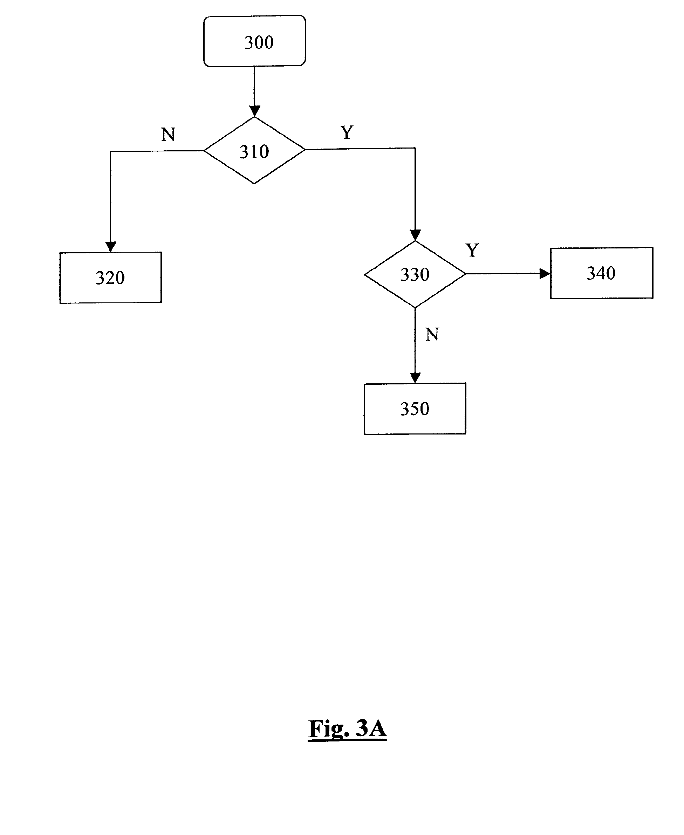

Fig. 3A gives a synoptic of the method of call admission control according to the first embodiment of the invention. At step 300 an incoming user requests a call with a given QoS. At step 310, condition (12) is checked, i.e. it is checked whether the channel gain at the time of request is high enough to combat the highest expected level of interference (corresponding to the full load $\Lambda^{max}$). In the negative, the QoS cannot be guaranteed and the call is blocked at step 320. In the affirmative, condition (13) is checked, i.e. it is checked whether the new load would be lower than the capacity $\Lambda^{max}$. In the affirmative, the new connection is admitted at step 340. In the negative, the call is blocked at step 350.

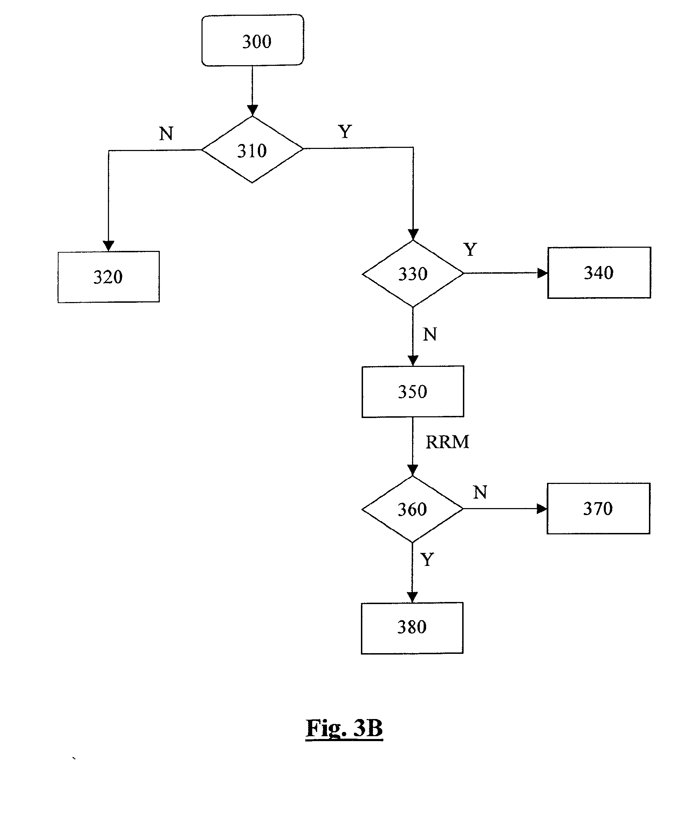

Alternatively, according a to a variant of the first embodiment represented in Fig. 3B, instead of blocking the call, a request is transmitted to the RRM at step 350. If the RRM considers that the cell in question is becoming a hot spot because of the high blocking rate experienced, it checks whether a new balance between the loads of neighbouring cells can be reached (step 360). If so, a new capacity value $\Lambda^{max}$ is attributed to the cell at step 380 and the call admission process starts over again. Conversely, if the RRM considers that the situation of the cell is not critical or if a new balance cannot be reached despite of a critical load (step 360), the call is blocked at step 370.

In general, the variations of traffic are predictable (and predicted by the capacity function) and consequently the value $\Lambda^{max}$ can be varied over a much longer time than the average call duration. Hence, the user can be confident that the requested QoS will be maintained until the end of the call.

The possibility of balancing the loads of neighbouring cells under the supervision of the RRM ensures some flexibility in the radio planning. In particular, the density of base stations in a given area may be lowered and/or the constraint on the choice of their location may be relaxed.

It is assumed in the following that the users can access to real time services or non-real time services.

According to a second embodiment of the invention, further flexibility is introduced by allowing a modification of the resources allocated to the non real time services. It should be reminded first that the various categories of services fall in fact within two large classes: real time services (like voice or video applications) and non real time services (like internet browsing). For example, four categories of services are specified in UMTS: "conversational", "streaming", which are real-time (RT) and "interactive", "background" which are non-real-time (NRT).

We can therefore distinguish two load components in $\Lambda_N$ (see expression 8): a real-time component denoted $\Lambda^{RT}_N$ and defined as:

$$\Lambda^{RT}_N = \sum_{p \in RT} N_p \lambda_p \qquad (14)$$

with

$$\lambda_p = \frac{1}{1 + \dfrac{W}{R_p \gamma_p}}$$

where $R_p$ and $\gamma_p$ are respectively the average bit rate and the target BER for the RT service $p$, and a non real-time component denoted $\Lambda^{NRT}_N$ and defined as:

$$\Lambda^{NRT}_N = \sum_{p \in NRT} N_p \lambda_p \qquad (15)$$

with

$$\lambda_p = \frac{1}{1 + \dfrac{W}{R_p \gamma_p}}$$

where $R_p$ and $\gamma_p$ are respectively the maximum authorised bit rate and the target BER for the NRT service $p$.

The RRM knows for each connection, the class of the service(s) it belongs to, the average bit rate or the maximum authorised bit rate and the BER target value. In UMTS, the maximum authorised bit rate for a given user can take discrete values which are determined by the so-called TFCS (Transport Format Combination Set). These data are stored in a table at the RNC and regularly updated. Hence, the real time component $\Lambda^{RT}_N$ and the non real-time component $\Lambda^{NRT}_N$ can be estimated and updated with accuracy.

The purpose of the second embodiment is to grant a higher priority to the real-time services. While a part of the cell capacity is reserved for each RT connection in order to guarantee the QoS it requests, a NRT connection is allowed to use the remaining capacity as far as it does not impede the already established RT connections.

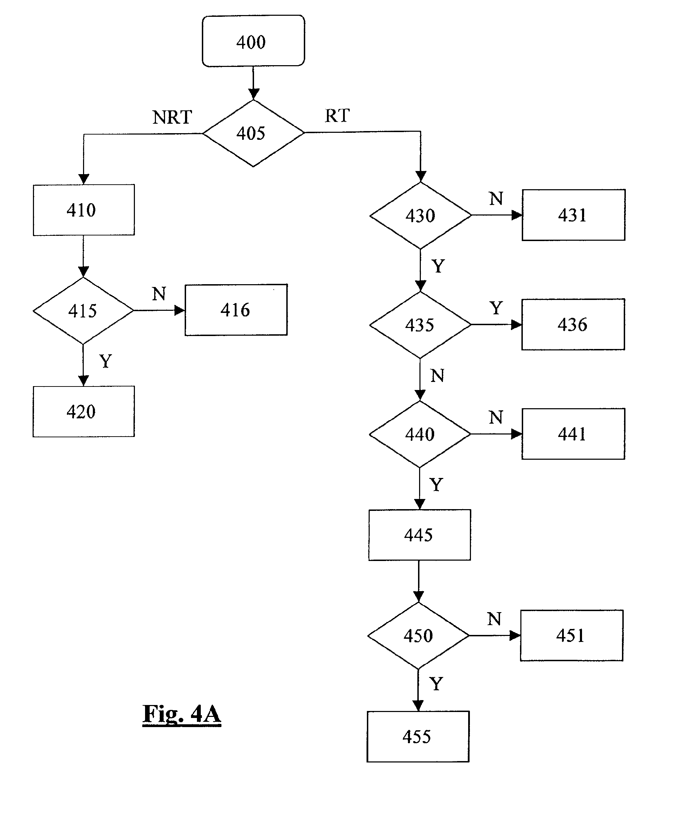

Fig. 4A gives a synoptic of the method of call admission control according to the second embodiment of the invention.

At step 400 a user requests a connection with a given QoS. First, at step 405, it is checked whether the connection requested corresponds to a RT service or a NRT service.

If it corresponds to a RT service, it is checked at step 430 whether condition (12) is fulfilled. In the negative, the QoS requested by the user cannot be guaranteed and the call is blocked at step 431. In the affirmative, the condition (13) is checked at step 435. If condition (13) is verified, the call is admitted at step 436. If not, the following condition is checked at step 440:

$$\Lambda^{RT}_N + \lambda_{N+1} \le \Lambda^{max} \qquad (16)$$

that is whether the load increment ($\lambda_{N+1}$) requested by the user is compatible with the load contribution of the other existing RT services ($\Lambda_N^{RT}$).

If the condition (16) is not verified, the QoS requested cannot be guaranteed and the call is blocked at step 441. Conversely, if condition (16) is fulfilled, the new call can be accommodated, though at the expense of the NRT services. It is therefore proposed to reduce the resources allocated to the NRT services (e.g. the maximum authorised rates thereof, by the so-called "TFC Control" in UMTS) to free some resource for the incoming call. Those NRT services experiencing a low channel gain or exhibiting a low buffer occupancy will be hurt first, e.g. their maximum authorised rates will be reduced. The reduction of the NRT resources can be performed iteratively by consecutive decrementing steps (e.g. until a maximum number of steps is reached) or by a single decrementing step 445. After the NRT resources have been reduced, condition (13) is checked again at step 450, that is, more precisely:

$$\Lambda_N^{NRT}(reduced) + \Lambda_N^{RT} + \lambda_{N+1} \leq \Lambda^{max} \tag{17}$$

If condition step (17) is met, the call is admitted at step 455. If not, the call is then blocked at step 451 (or, alternatively, a further decrementing step is carried out as mentioned above).

Turning now to the case where the connection requested by the incoming user corresponds to a NRT service, it will be accepted only if it does not impede the existing RT services in the cell, i.e. if:

$$h_i k_i \geq \frac{N_0 + MAI_{extra}}{P^{max}} \frac{1}{1 - \Lambda_{N+1}} = \frac{N_0 + MAI_{extra}}{P_{max}} \frac{1}{1 - \Lambda_N - \lambda_{N+1}} \tag{18}$$

where the condition (18) must be fulfilled for all the users $i$ of the cell using a RT service. This will be the case if:

$$\rho^{RT} \geq \frac{N_0 + MAI_{extra}}{P_{max}} \frac{1}{1 - \Lambda_N - \lambda_{N+1}} \tag{19}$$

where

$$\rho^{RT} = \underset{i \in RT}{Min}(h_i k_i).$$

. Recalling that

$$\lambda_{N+1} = \frac{1}{1 + \dfrac{W}{R_{N+1} \gamma_{N+1}}}$$

where $R_{N+1}$ is the maximum authorised rate of the NRT service, the above condition is equivalent to:

$$R_{N+1} \leq r_{max1}^{NRT} \tag{20}$$

where

$$r_{max_1}^{NRT} = \frac{W}{\gamma_{N+1}} \left[ \frac{1 - (\Lambda_N + \lambda^{RT})}{\Lambda_N + \lambda^{RT}} \right] \text{ with } \lambda^{RT} = \frac{N_0 + MAI_{extra}}{\rho^{RT} P^{max}} \tag{20'}$$

In addition, the incoming user must be able to support the requested NRT service, that is:

$$h_{N+1}k_{N+1} \geq \frac{N_0+MAI_{extra}}{P^{max}} \frac{1}{1-\Lambda_{N+1}} = \frac{N_0+MAI_{extra}}{P^{max}} \frac{1}{1-\Lambda_N \cdot \frac{1}{k_{N+1}}} \qquad (21)$$

Recalling that

$$k_{N+1} = 1 + \frac{W}{R_{N+1}\gamma_{N+1}}$$

, the constraint (21) is equivalent to:

$$R_{N+1} \leq r_{max2}^{NRT} \qquad (22)$$

where

$$r_{max_2}^{NRT} = \frac{W}{\gamma_{N+1}}\left[\frac{h_{N+1}(1-\Lambda_N)P^{max}}{(N_0+MAI_{extra})+h_{N+1}\Lambda_N P^{max}}\right] \qquad (22')$$

The base station knows (from measurements performed by the mobile terminals and transmitted thereto) the gains of the transmission channels of the different users. These channel gains are stored in a table which is constantly updated and made available to the RRM. The RRM can therefore determine the values $r_{max1}^{NRT}$ and $r_{max2}^{NRT}$ from (20') and (22').

The values $r_{max1}^{NRT}$ and $r_{max2}^{NRT}$ are calculated at step 410 and it is checked at step 415 whether there exists an authorised maximum rate value (by looking up in the TFCS table for a UMTS telecommunication system) such that:

$$0 < r_{max}^{NRT} \leq Min(r_{max1}^{NRT}, r_{max2}^{NRT}) \qquad (23)$$

In the negative, the call is blocked at step 416. In the affirmative, the call is accepted (step 420) with the maximum authorised rate for the NRT service being chosen as the highest rate value $r_{max}^{NRT}$ verifying (23) i.e.

$$R_{N+1} = \underset{r_{max}^{NRT} \leq Min\left(r_{max_1}^{NRT}, r_{max_2}^{NRT}\right)}{Max\left(r_{max}^{NRT}\right)} \qquad (24)$$

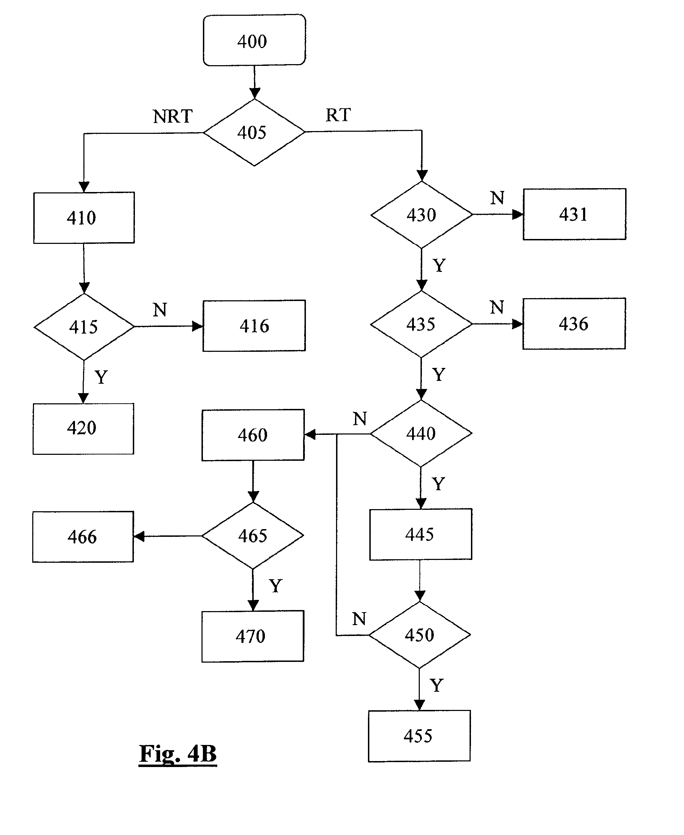

Fig. 4B gives a synoptic of the method for call admission control according to a variant of the second embodiment of the invention.

In contrast to the method illustrated in Fig. 4A, instead of blocking the call at steps 441 and 451 (for a real time service), a request is transmitted to the RRM at step 460. If the RRM considers that the cell in question is becoming a hot spot e.g. because of a high blocking rate of calls using a RT service, it checks whether a new balance between the loads of neighbouring cells can be reached (step 465). If the RRM considers that the situation of the cell is not critical or if a new balance cannot be reached despite of its critical load, the call is blocked at step 466. Otherwise, a new capacity value $\Lambda^{max}$ is attributed to the cell at step 470 and the call admission process starts over again.

Although the invention has been essentially described as a method for admitting or rejecting a request for connection from an incoming user, it should be understood by the man skilled in the art that the invention equally applies to a user already served by the base station but desiring to establish a RT or NRT additional connection.

**Claims**

1. Method of call admission control in a CDMA mobile telecommunication system **characterised in that**, a new connection being requested by a user of said system to a base station thereof, it comprises a first comparison step comparing a value indicating the gain ($h_{N+1}$) of the transmission channel between said user and said base station with a predetermined threshold value ($h(\Lambda^{max})$) characteristic of the cell served by said base station, and a first decision step deciding whether to reject the connection of said user on the basis of the result of said first comparison step.

2. Method of call admission control according to claim 1, **characterised in that** said threshold value is calculated from a predetermined capacity value ($\Lambda^{max}$) of said cell.

3. Method of call admission control according to claim 2, **characterised in that** said capacity is variable with time, a value of said capacity at a given time being predicted on the basis of an expected load of said cell at that time.

4. Method of call admission control according to claim 2 or 3, **characterised in that** said capacity value is adapted in accordance with a measured rejection rate of requests for connection to said base station.

5. Method of call admission control according to claim 2 or 3, **characterised in that** said capacity value is adapted in accordance to a measured saturation rate of said cell.

6. Method of call admission control according to claim 2 or 3, **characterised in that** if said cell becomes too heavily loaded while at least a second cell adjacent thereto carries a load lower than its capacity value, the capacity value of said cell is increased while the capacity value of said second cell is decreased.

7. Method of call admission control according to any preceding claim, **characterised in that** it comprises a second comparison step comparing the sum of the current load of said cell and the additional load that would be generated by said new connection with the capacity value of said cell and a second decision step deciding whether to admit the connection of said user on the basis of the result of said second comparison step.

8. Method of call admission control in a CDMA mobile telecommunication system providing to users thereof connections of a real-time type or a non real-time type, a connection of the real-time type being **characterised by** a guaranteed average data rate and target bit error rate and a connection of the non real-time type being **characterised by** a maximum authorised data rate, **characterised in that**, a new connection of the real-time type being requested by a user of said system to a base station thereof, it comprises a first comparison step comparing a value indicating the gain ($h_{N+1}$) of the transmission channel between said user and said base station with a predetermined threshold value ($h(\Lambda^{max})$) characteristic of the cell served by said base station, and a first decision step deciding whether to reject the connection of said user on the basis of the result of said first comparison step.

9. Method of call admission control according to claim 8, **characterised in that** said threshold value is calculated from a predetermined capacity value ($\Lambda^{max}$) of said cell.

10. Method of call admission control according to claim 9, **characterised in that** said capacity is variable with time, a value of said capacity at a given time being predicted on the basis of an expected load of said cell at that time.

11. Method of call admission control according to claim 9 or 10 **characterised in that** said capacity value is adapted in accordance with a measured rejection rate of requests for connection of the real-time type to said base station.

12. Method of call admission control according to any claim 8 to 11, **characterised in that** it comprises a second comparison step comparing the sum of the current load of said cell and the additional load that would be generated by said new connection with the capacity value of said cell and a second decision step deciding to admit the connection of said user if said sum lies below said capacity value.

13. Method of call admission control according to claim 12, **characterised in that**, if said connection of the real-type is not admitted at said second decision step, a third comparison step is carried out for comparing the sum of the contribution to the load due to the connections of the real-type already established with said base station and the additional load that would be generated by said new connection with the capacity value of said cell, followed by a third decision step deciding to reject the connection of said user if said sum exceeds said capacity value.

**14.** Method of call admission control according to claim 13, **characterised in that** if said sum does not exceed said capacity value, a maximum rate of one or a plurality of connections of the non-real type is lowered to reduce said load.

**15.** Method of call admission control according to claim 14, **characterised in that** it comprises a fourth comparison step for comparing the sum of the reduced load of said cell and the additional load that would be generated by said new connection with the capacity value of said cell and a fourth decision step deciding whether to admit or reject the connection of said user on the basis of the result of said fourth comparison step.

**16.** Method of call admission control according to any of claims 8 to 15, **characterised in that**, a new connection of the non real-time type being requested by a further user of said system to a base station thereof, a first maximum data rate is calculated for said non-real time type connection, said first maximum data rate being determined so as not damaging the quality of service of the existing real-time type connections in the cell.

**17.** Method of call admission control according to claim 16, **characterised in that** a second maximum data rate is calculated for said non-real time type connection, said second maximum data rate being determined as the highest rate compatible with the bit error rate requested for said non-real time type connection, the gain of the transmission channel between said further user and said base station, and the current load of the cell.

**18.** Method of call admission control according to claim 17, **characterised in that** it is checked whether there exists a positive value of maximum authorised data rate lower than said first and second data rates, the new connection of the non real-time type is admitted and attributed a maximum authorised data rate equal to the highest of the such values, the new connection of the non real-time type being rejected otherwise.

BS$_2$

BS$_1$

BS$_3$

BS$_4$

**Fig. 1A**

BS$_1$

BS$_2$

MT

BS$_4$

BS$_3$

**Fig. 1B**

BS$_1$

BS$_2$

MT

BS$_4$

BS$_3$

**Fig. 1C**

**Fig. 2A**

**Fig. 2B**

```
                    ┌─────────┐
                    │   300   │
                    └────┬────┘
                         │
                         ▼
          N         ◇─────────◇         Y
    ┌────────────── │   310   │ ──────────────┐
    │               ◇─────────◇               │
    │                                         │
    ▼                                         ▼
┌───────┐                              ◇─────────◇      Y    ┌───────┐
│  320  │                              │   330   │ ───────── │  340  │
└───────┘                              ◇─────────◇           └───────┘
                                            │ N
                                            ▼
                                        ┌───────┐
                                        │  350  │
                                        └───────┘
```

# Fig. 3A

```
                        ┌─────────┐
                        │   300   │
                        └─────────┘
                             │
                             ▼
            N          ◇─────────◇          Y
        ┌──────────────│   310   │──────────────┐
        │              ◇─────────◇              │
        │                                       │
        ▼                                       ▼
   ┌─────────┐                             ◇─────────◇        Y     ┌─────────┐
   │   320   │                             │   330   │──────────────│   340   │
   └─────────┘                             ◇─────────◇              └─────────┘
                                                │ N
                                                ▼
                                           ┌─────────┐
                                           │   350   │
                                           └─────────┘
                                                │ RRM
                                                ▼
                                           ◇─────────◇        N     ┌─────────┐
                                           │   360   │──────────────│   370   │
                                           ◇─────────◇              └─────────┘
                                                │ Y
                                                ▼
                                           ┌─────────┐
                                           │   380   │
                                           └─────────┘
```

**Fig. 3B**

**Fig. 4A**

**Fig. 4B**

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ISHIKAWA Y ET AL: "CAPACITY DESIGN AND PERFORMANCE OF CALL ADMISSION CONTROL IN CELLULAR CDMA SYSTEMS" IEEE JOURNAL ON SELECTED AREAS IN COMMUNICATIONS, IEEE INC. NEW YORK, US, vol. 15, no. 8, 1 October 1997 (1997-10-01), pages 1627-1635, XP000721292 ISSN: 0733-8716 * the whole document * | 1,8 | H04Q7/38 |
| X | US 5 687 171 A (SHIN ET AL.) 11 November 1997 (1997-11-11) * abstract; figure 2 * | 1 | |
| Y | WO 98 24199 A (NOKIA TELECOMMUNICATIONS OY.) 4 June 1998 (1998-06-04) * abstract; figures 1-4 * * page 8, line 13 - page 9, line 23 * | 1-18 | |
| D,Y | SAMPATH A ET AL: "Power control and resource management for a multimedia CDMA wireless system" PERSONAL, INDOOR AND MOBILE RADIO COMMUNICATIONS, 1995. PIMRC'95. WIRELESS: MERGING ONTO THE INFORMATION SUPERHIGHWAY., SIXTH IEEE INTERNATIONAL SYMPOSIUM ON TORONTO, ONT., CANADA 27-29 SEPT. 1995, NEW YORK, NY, USA,IEEE, US, 27 September 1995 (1995-09-27), pages 21-25, XP010150786 ISBN: 0-7803-3002-1 * the whole document * | 1-18 | TECHNICAL FIELDS SEARCHED (Int.Cl.7) H04Q |
| A | EP 1 119 213 A (LUCENT TECHNOLOGIES INC.) 25 July 2001 (2001-07-25) * claims 7-10 * | 1-18 | |

-/--

The present search report has been drawn up for all claims

| Place of search | Date of completion of the search | Examiner |
|---|---|---|
| BERLIN | 17 June 2002 | Danielidis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 29 0026

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 128 500 A (RAGHAVAN) 3 October 2000 (2000-10-03) * abstract; figures 2,3 * --- | 3-6 | |
| A | GB 2 316 578 A (MOTOROLA LTD.) 25 February 1998 (1998-02-25) * abstract * * page 5, line 6 - line 27 * --- | 4,5,11 | |
| A | WO 98 10615 A (NOKIA TELECOMMUNICATIONS OY.) 12 March 1998 (1998-03-12) * abstract; figures 2-5 * * page 7, line 2 - line 23 * * page 8, line 15 - line 14 * ----- | 8-18 | |
| | | | TECHNICAL FIELDS SEARCHED (Int.Cl.7) |

The present search report has been drawn up for all claims

| Place of search | Date of completion of the search | Examiner |
|---|---|---|
| BERLIN | 17 June 2002 | Danielidis, S |

EPO FORM 1503 03.82 (P04C01)

## ANNEX TO THE EUROPEAN SEARCH REPORT
## ON EUROPEAN PATENT APPLICATION NO.

EP 02 29 0026

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2002

| Patent document cited in search report | | Publication date | Patent family member(s) | | Publication date |
|---|---|---|---|---|---|
| US 5687171 | A | 11-11-1997 | KR | 138820 B1 | 01-07-1998 |
| WO 9824199 | A | 04-06-1998 | FI | 964707 A | 27-05-1998 |
| | | | AU | 726338 B2 | 02-11-2000 |
| | | | AU | 5055298 A | 22-06-1998 |
| | | | CN | 1209921 A | 03-03-1999 |
| | | | EP | 0879511 A2 | 25-11-1998 |
| | | | WO | 9824199 A2 | 04-06-1998 |
| | | | JP | 2000504530 T | 11-04-2000 |
| | | | NO | 983426 A | 24-07-1998 |
| | | | US | 6317600 B1 | 13-11-2001 |
| | | | US | 2002034951 A1 | 21-03-2002 |
| EP 1119213 | A | 25-07-2001 | EP | 1119213 A1 | 25-07-2001 |
| | | | US | 2001019543 A1 | 06-09-2001 |
| US 6128500 | A | 03-10-2000 | NONE | | |
| GB 2316578 | A | 25-02-1998 | NONE | | |
| WO 9810615 | A | 12-03-1998 | FI | 963454 A | 04-03-1998 |
| | | | AU | 4119997 A | 26-03-1998 |
| | | | CN | 1232600 A | 20-10-1999 |
| | | | EP | 0976286 A1 | 02-02-2000 |
| | | | WO | 9810615 A1 | 12-03-1998 |
| | | | JP | 2000517502 T | 26-12-2000 |
| | | | US | 6339697 B1 | 15-01-2002 |

EPO FORM P0459

For more details about this annex : see Official Journal of the European Patent Office, No. 12/82